(19) Europäisches Patentamt
European Patent Office
Office européen des brevets

(11) Publication number: **0 315 266 B1**

# (12) EUROPEAN PATENT SPECIFICATION

(45) Date of publication of patent specification: **26.01.94**

(51) Int. Cl.$^5$: **C08G 67/02**

(21) Application number: **88202422.7**

(22) Date of filing: **28.10.88**

The file contains technical information submitted after the application was filed and not included in this specification

## (54) Polyketone polymers.

(30) Priority: **02.11.87 NL 8702609**

(43) Date of publication of application:
**10.05.89 Bulletin 89/19**

(45) Publication of the grant of the patent:
**26.01.94 Bulletin 94/04**

(84) Designated Contracting States:
**BE CH DE FR GB IT LI NL**

(56) References cited:
**EP-A- 0 222 454**
**EP-A- 0 229 408**
**EP-A- 0 264 159**
**GB-A- 1 522 942**
**US-A- 3 689 460**

(73) Proprietor: **SHELL INTERNATIONALE RESEARCH MAATSCHAPPIJ B.V.**
**Carel van Bylandtlaan 30**
**NL-2596 HR Den Haag(NL)**

(72) Inventor: **Drent, Eit**
**Badhuisweg 3**
**NL-1031 CM Amsterdam(NL)**

**EP 0 315 266 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The invention relates to novel polymers of carbon monoxide with one or more alpha-mono-olefins and with one or more di-olefinically unsaturated compounds, also referred to as polyketones.

High molecular weight linear alternating copolymers of carbon monoxide and an alpha-olefin, such as ethene, can be prepared by using catalyst compositions based upon

a) a palladium compound,

b) an anion of an acid with a pKa of less than 4, and

c) a phosphorus or nitrogen bidentate ligand, which ligand must satisfy certain structural requirements.

The above polymers include carbonyl groups as functional groups. At least part of these carbonyl groups can be converted into other functional groups. This chemical modification leads to changes in the polymer properties, which render them eligible for uses for which the original polymers were not or not very suitable.

The Applicant has carried out an investigation into the introduction of olefinically unsaturated double bonds into the above-mentioned polymers, with the object of preparing polymers which are suitable for cross linking and further chemical modification by addition reactions at the double bonds. Converting part of the carbonyl groups present in the polymers into hydroxyl groups by catalytic hydrogenation followed by catalytic dehydration appeared to be an unsuitable route to the introduction of olefinically unsaturated double bonds into these polymers. Owing to various side reactions, a mixture of polymers is formed in which much of the polymer linearity is lost while the introduction of olefinically unsaturated double bonds into the polymers remains minimal.

It has now been found that, surprisingly, the above-mentioned palladium/bidentate catalyst compositions can be used to prepare polymers which are closely related to the known carbon monoxide/alpha-olefin copolymers but which, besides the carbonyl groups, also contain a considerable amount of the desired olefinically unsaturated double bonds as functional groups, when in addition to carbon monoxide and one or more alpha-mono-olefins (A), one or more di-olefinically unsaturated compounds (B), in which compounds the double bonds are present as conjugated bonds, are also taken up in the monomer mixture from which the polymers are prepared. Application of the above-mentioned catalyst compositions to such a monomer mixture will result in linear polymers made up of units of the formula -(CO)-A′- and units of the formula -(CO)-B′- in which A′ represents a monomer unit derived from a monomer A used and B′ a mono-olefinically unsaturated monomer unit derived from a monomer B used. The term "polymers containing a considerable amount of olefinically unsaturated double bonds" is used in this patent application to designate polymers which on average contain fewer than 1000 units -(CO)-A′- per unit -(CO)-B′-, sufficient anyhow to render them suitable for further chemical modification.

The present invention therefore relates to novel polymers of carbon monoxide with one or more alpha-olefins and with one or more other olefinically unsaturated compounds, characterized in that

a) they are obtainable by polymerization of carbon monoxide with one or more alpha-mono-olefins (A) and with one or more diolefinically unsaturated compounds B, in which compounds the double bonds are conjugated,

b) they have a linear structure,

c) they are made up of units of the formula -(CO)-A′-and units of the formula -(CO)-B′-, in which A′ and B′ represent monomer units derived from monomers A and B, respectively, and wherein in the copolymer the unit (CO) alternates with the units A' and B' and

d) on average they contain fewer than 1000 units -(C)-A′- per unit -(C)-B'-.

Polymers that satisfy the criteria a)-d) are novel.

The present patent application therefore relates to novel polymers of carbon monoxide with one or more alpha-mono-olefins and with one or more other olefinically unsaturated compounds, which polymers satisfy the criteria mentioned hereinbefore under a)-d). The patent application further relates to the preparation of these polymers.

Preferably, the polymers of the invention contain on average fewer than 750, and in particular on average fewer than 500, units -(CO)-A′- per unit -(CO)-B′-. The monomers A and B used in the preparation of the polymers of the invention preferably contain at most 10 carbon atoms in the molecule. Further, the polymers are preferably prepared from a monomer mixture containing only one monomer A and only one monomer B. Examples of alpha-mono-olefins which are eligible for use as monomers A, are ethene, propene and butene-1. Preference is given to ethene. Examples suitable di-olefinically unsaturated compounds in which the double bonds are conjugated double bonds and which in the preparation of the polymers are eligible for use as monomers B, are butadiene, isoprene, chloroprene and hexadiene-1,3. Preference is given to the use of butadiene as monomer B.

In addition to carbonyl groups, the polymers of the invention contain olefinically unsaturated double bonds as functional groups. Like the carbonyl groups, these oleficially unsaturated double bonds can be converted at least partly into other functional groups by means of chemical modification.

For the preparation of the polymers of the invention it is preferred to use the afore-mentioned catalyst compositions containing a phosphorus or nitrogen bidentate ligand. The palladium compound used in these catalyst compositions as component a) is preferably a palladium salt of a carboxylic acid, in particular palladium acetate.

As examples of acids with a pKa of less than 4 (determined in aqueous solution at 18 °C) whose anions should be present in the catalyst compositions as components b) may be mentioned, for instance, mineral acids, such as perchloric acid, sulphuric acid, phosphoric acid and nitrous acid, sulphonic acids, such as 2-hydroxypropane-2-sulphonic acid, para-toluenesulphonic acid, methanesulphonic acid and trifluoromethanesulphonic acid, and carboxylic acids, such as trifluoroacetic acid, trichloroacetic acid, dichloroacetic acid, difluoroacetic acid, tartaric acid and 2,5-dihydroxybenzoic acid. The catalyst composition preferably contains an anion of an acid with a pKa of less than 2 as the component b) and in particular an anion of a sulphonic acid, such as para-toluenesulphonic acid or an anion of a carboxylic acid, such as trifluoroacetic acid. Preferably, component b) is present in the catalyst compositions in a ratio of from 0.5 to 200 and in particular of from 1.0 to 100 equivalents per gram atom of palladium. Component b) may be incorporated in the catalyst compositions either in the form of an acid or in the form of a salt. Eligible salts include non-noble transition metal salts. When component b) is used as a salt of a non-noble transition metal, preference is given to a copper, especially a cupric salt. Optionally, components a) and b) may be combined in a single compound. An example of such a compound is palladium para-tosylate.

The phosphorus bidentate ligands which can suitably be used in the catalyst compositions as components c) have the general formula $R_1R_2P\text{-}R\text{-}PR_3R_4$, wherein $R_1$, $R_2$, $R_3$ and $R_4$ represent the same or different hydrocarbyl groups which may or may not be substituted with polar groups and R represents a bivalent organic bridging group containing at least two carbon atoms in the bridge. Phosphorus bidentate ligands in which $R_1$, $R_2$, $R_3$ and $R_4$ represent the same or different aryl groups which may or may not be substituted with polar groups are preferred, and in particular such phosphorus bidentate ligands in which at least one of the aryl groups contains at least one polar substituent in a position ortho or para to the phosphorus atom. Advantageously the polar substituents which may optionally be present in the groups $R_1$, $R_2$, $R_3$ and $R_4$, are alkoxy groups, in particular methoxy groups. Finally, preference is given to phosphorus bidentate ligands in which the groups $R_1$, $R_2$, $R_3$ and $R_4$ are identical and in which the bivalent bridging group contains three carbon atoms in the bridge. Examples of suitable phosphorus bidentate ligands are
1,3-bis[di(4-methoxy-phenyl)phosphino]propane,
1,3-bis[di(2-methoxy-phenyl)phosphino]propane,
1,3-bis[di(2,4-dimethoxy-phenyl)phosphino]propane,
1,3-bis[di(2,6-dimethoxy-phenyl)phosphino]propane, and
1,3-bis[di(2,4,6-trimethoxy-phenyl)phosphino]propane.

The use of phosphorus bidentate ligands in which at least one of the groups $R_1$, $R_2$, $R_3$ and $R_4$ is an aryl group containing at least one polar substituent in a position ortho to phosphorus as the component c), offers as an additional advantage that, apart from anions of acids with a pKa of less than 4, anions of acids with a pKa of at least 4 but less than 6 can also be suitably used as components b). By preference, the phosphorus bidentate ligands are used in the catalyst compositions in a ratio of 0.1-3 and in particular of 0.75-2 mol per mol of palladium compound.

Nitrogen bidentate ligands which can suitably be used as components c) in the catalyst compositions have the general formula

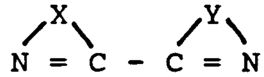

wherein X and Y represent similar or different bridging groups each containing three or four atoms in the bridge at least two of which are carbon atoms. In the nitrogen bidentate ligands the bridging groups X and Y are connected through the two carbon atoms depicted in the general formula. In addition to this connection, the bridging groups X and Y may also have a second linkage, as in the case of 1,10-phenanthroline and compounds derived therefrom. If, besides carbon atoms, the bridging groups X and Y also contain other atoms in the bridge, these atoms are preferably nitrogen atoms. Preference is further given to nitrogen bidentate ligands in which the bridging groups X and Y are the same. Examples of suitable nitrogen

bidentate ligands are 2,2′-bipyridine and compounds derived therefrom and 1,10-phenanthroline and compounds derived therefrom. Of these, 2,2′-bipyridine or 1,10-phenanthroline are preferred. The nitrogen bidentate ligands are preferably used in the catalyst compositions in a ratio of 0.5-200 and in particular of 1-50 mol per mol of palladium compound.

In the catalyst compositions containing a phosphorus or nitrogen bidentate ligand as component c), a 1,4-quinone is advantageously incorporated as a component d) to enhance catalyst activity. 1,4-Benzoquinones and 1,4-naphthoquinones have been found very suitable for the purpose.

The preparation of the polymers of the invention is preferably carried out by contacting the monomers with a solution of the catalyst composition in a diluent in which the polymers are insoluble or virtually insoluble. During the polymerization, the polymers are obtained in the form of a suspension in the diluent. Suitable diluents that may be mentioned are lower alcohols such as methanol and ethanol. The polymerization may be carried out either batch wise or continuously. The polymerization may also be carried out in the gaseous phase, if desired.

The amounts of bidentate-ligand-containing catalyst composition used in the preparation of the polymers of the invention may vary within wide ranges. Per mol of olefinically unsaturated compound to be polymerized, such a quantity of catalyst is preferably used as to contain from $10^{-7}$ to $10^{-3}$ and in particular from $10^{-6}$ to $10^{-4}$ gram atom of palladium. The molar ratio of the olefinically unsaturated compounds relative to carbon monoxide is preferably 10:1-1:5 and in particular 5:1-1:2.

The preparation of the polymers of the invention by using a bidentate-ligand-containing catalyst is preferably carried out at a temperature of 20-200 °C and a pressure of 1-200 bar and in particular at a temperature of 30-150 °C and a pressure of 20-100 bar. The carbon monoxide used in the polymer preparation of the invention need not be pure. It may contain such contaminants as hydrogen, carbon dioxide and nitrogen.

The invention is now illustrated with the aid of the following examples.

## Example 1

A carbon monoxide/ethene/butadiene terpolymer was prepared as follows. A stirred autoclave of 250 ml content was charged with a catalyst solution comprising
50 ml of methanol,
0.1 mmol of palladium acetate,
2 mmol trifluoroacetic acid, and
0.15 mmol of 1,3-bis[di(2-methoxyphenyl)phosphino]propane.

After air present in the autoclave was removed by evacuation, 7 ml of liquid butadiene was introduced. Then compressed carbon monoxide was let in until a pressure of 25 bar was reached, followed by ethene until a pressure of 50 bar was reached. Finally, the contents of the autoclave were heated to 110 °C. After 10 hours the polymerization was terminated by cooling to room temperature and releasing the pressure. The polymer was filtered off, washed with methanol and dried in vacuo at room temperature.

1.0 g of terpolymer was obtained.

## Example 2

A second carbon monoxide/ethene/butadiene terpolymer was prepared substantially in the same way as in Example 1, except that
a) the catalyst solution contained 2 mmol of tartaric acid instead of trifluoroacetic acid, and
b) the reaction temperature was 100 °C instead of 110 °C.

1.0 g of terpolymer was obtained.

## Example 3

A third carbon monoxide/ethene/butadiene terpolymer was prepared substantially in the same way as in Example 1, except that
a) the catalyst solution used comprised
50 ml of methanol,
0.1 mmol of palladium acetate,
1 mmol para-toluenesulphonic acid,
3 mmol of 2,2′-bipyridine, and
20 mmol of 1,4-benzoquinone

b) the autoclave was pressurized with carbon monoxide until a pressure of 30 bar was reached and then ethene until a pressure of 50 bar was reached,
c) the reaction temperature was 100 ° C instead of 110 ° C, and
d) the reaction time was 5 hours instead of 10 hours.

1.4 g of terpolymer was obtained.

With the aid of $^{13}C$-NMR analysis it was established that the carbon monoxide/ethene/butadiene terpolymers prepared in accordance with Examples 1-3 had a linear structure and were made up of units of the formula $-(CO)-(CH_2CH_2)-$ and units of the formula $-(CO)-(C_4H_6)-$, which units occurred randomly distributed within the terpolymers. For each of the terpolymers prepared according to Examples 1-3, the average number of units of formula $-(CO)-(C_2H_4)-$occurring per unit $-(CO)-(C_4H_6)-$ was determined from the data afforded by the $^{13}C$-NMR analysis. The results are listed in the following Table.

**TABLE**

| Terpolymer prepared according to Example | Average number of units $-(CO)-(C_2H_4)-$ per unit $-(CO)-(C_4H_6)-$ |
|---|---|
| 1 | 140 |
| 2 | 90 |
| 3 | 21 |

## Claims

1. Novel polymers of carbon monoxide with one or more alpha-olefins and with one or more other olefinically unsaturated compounds, characterized in that
   a) they are obtainable by polymerization of carbon monoxide with one or more alpha-mono-olefins (A) and with one or more di-olefinically unsaturated compounds (B), in which compounds the double bonds are conjugated,
   b) they have a linear structure,
   c) they are made up of units of the formula -(CO) -A'- and units of the formula -(CO)-B'- in which A' and B' represent monomer units derived from monomers A and B, respectively, and wherein in the copolymer the unit (CO) alternates with the units A' and B' and
   d) on average they contain fewer than 1000 units -(CO)-A'- per unit -(CO)-B'-.

2. Polymers as claimed in claim 1, characterized in that on average they contain fewer than 500 units -(CO) -A'- per unit -(CO)-B'-.

3. Polymers as claimed in claim 1 or 2, characterized in that they are obtainable starting from a monomer mixture which contains only one monomer A and only one monomer B.

4. Polymers as claimed in one or more of claims 1-3, characterized in that the monomer A is ethene.

5. Polymers as claimed in one or more of claims 1-4, characterized in that the monomer B is butadiene.

6. Process for the preparation of polymers as defined in claim 1, characterized in that a mixture of carbon monoxide with one or more monomers A and with one or more monomers B is polymerized in the presence of a catalyst composition based upon
   a) a palladium compound,
   b) an anion of an acid with a pKa of less than 4, and

c) either a phosphorus bidentate ligand of the general formula $R_1R_2P\text{-}R\text{-}PR_3R_4$ wherein $R_1$, $R_2$, $R_3$ and $R_4$ represent the same or different hydrocarbyl groups which may or may not be substituted with polar groups and R represents a bivalent organic bridging group containing at least two carbon atoms in the bridge, or a nitrogen bidentate ligand of the general formula

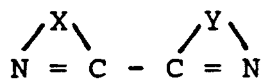

wherein X and Y represent the same or different bridging groups each containing three or four atoms in the bridge at least two of which are carbon atoms.

**7.** Process as claimed in claim 6, characterized in that a catalyst composition is used which is based upon a palladium salt of a carboxylic acid such as palladium acetate, as component a).

**8.** Process as claimed in claim 6 or 7, characterized in that a catalyst composition is used which is based upon an anion of a sulphonic acid, such as p-toluenesulphonic acid or an anion of a carboxylic acid, such as trifluoro acetic acid, as component b).

**9.** Process as claimed in one or more of claims 6-8, characterized in that a catalyst composition is used in which component b) is present in a ratio of from 1.0 to 100 equivalents per gram atom of palladium.

**10.** Process as claimed in one or more of claims 6-9, characterized in that a catalyst composition is used which contains a phosphorus bidentate ligand as the component c), in a ratio of 0.5-1.5 mol per mol of palladium compound.

**11.** Process as claimed in one or more of claims 6-9, characterized in that a catalyst composition is used which contains a nitrogen bidentate ligand as the component c), in a quantity of 1-50 mol per mol of palladium compound.

**12.** Process as claimed in one or more of claims 6-11, characterized in that it is carried out at a temperature of 30-150 °C, a pressure of 20-100 bar and a molar ratio of the olefinically unsaturated compounds relative to carbon monoxide in the mixture to be polymerized, of 5:1-1:2 and in that per mol of olefinically unsaturated compound to be polymerized, such a quantity of catalyst composition is used as to contain $10^{-6}$-$10^{-4}$ gram atom of palladium.

**Patentansprüche**

**1.** Neue Polymere von Kohlenmonoxid mit einem oder mehreren $\alpha$-Olefin(en) und mit einer oder mehreren olefinisch ungesättigten Verbindung(en), dadurch gekennzeichnet, daß

a) sie durch Polymerisation von Kohlenmonoxid mit einem oder mehreren $\alpha$-Monoolefin(en) (A) und mit einer oder mehreren di-olefinisch ungesättigten Verbindung(en) (B), bei welchen Verbindungen die Doppelbindungen konjugiert sind, erhältlich sind,

b) sie eine lineare Struktur haben,

c) sie von Einheiten der Formel -(CO)-A'- und Einheiten der Formel -(CO)-B'- hergestellt sind, wobei A' und B' sich von den Monomeren A und B abgeleitete Monomereinheiten darstellen und wobei in dem Copolymer die Einheit (CO) mit den Einheiten A' und B' alterniert, und

d) sie im Durchschnitt weniger als 1000 Einheiten -(CO)-A'-je Einheit -(CO)-B'- enthalten.

**2.** Polymere wie in Anspruch 1 beansprucht, dadurch gekennzeichnet, daß sie im Durchschnitt weniger als 500 Einheiten -(CO)-A'- je Einheit -(CO)-B'- enthalten.

**3.** Polymere wie in Anspruch 1 oder 2 beansprucht, dadurch gekennzeichnet, daß sie erhältlich sind durch Ausgehen von einem Monomerengemisch, das nur ein Monomer A und nur ein Monomer B enthält.

**4.** Polymere wie in einem oder mehreren der Ansprüche 1 - 3 beansprucht, dadurch gekennzeichnet, daß das Monomer A Ethen ist.

5. Polymere wie in einem oder mehreren der Ansprüche 1 bis 4 beansprucht, dadurch gekennzeichnet, daß das Monomer B Butadien ist.

6. Verfahren zur Herstellung der Polymere wie in Anspruch 1 definiert, dadurch gekennzeichnet, daß ein Gemisch von Kohlenmonoxid mit einem oder mehreren Monomeren A und mit einem oder mehreren Monomeren B in Gegenwart einer Katalysator-Zusammensetzung basierend auf
   a) einer Palladiumverbindung,
   b) einem Anion einer Säure mit einem pKa-Wert von weniger als 4, und
   c) entweder einem zweizähligen Phosphor-Liganden der allgemeinen Formel $R_1R_2P\text{-}R\text{-}PR_3R_4$, in der $R_1$, $R_2$,$R_3$ und $R_4$ gleiche oder unterschiedliche Kohlenwasserstoffgruppen darstellen, die mit polaren Gruppen substituiert sein können oder nicht substituiert sein können, und R ein zweiwertiges organisches Brückenglied mit mindestens zwei Kohlenstoffatomen in der Brücke darstellt,
   oder einem zweizähligen Stickstoff-Liganden der allgemeinen Formel

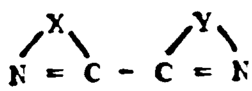

   in der X und Y gleiche oder unterschiedliche Brückengruppen darstellen, von denen jede drei oder vier Atome in der Brücke enthält, von denen mindestens zwei Kohlenstoffatome sind,
   polymerisiert wird.

7. Verfahren wie in Anspruch 6 beansprucht, dadurch gekennzeichnet, daß eine Katalysator-Zusammensetzung verwendet wird, die auf einem Palladiumsalz einer Carbonsäure, wie Palladiumacetat, als Komponent a) basiert.

8. Verfahren wie in Anspruch 6 oder 7 beansprucht, dadurch gekennzeichnet, daß eine Katalysator-Zusammensetzung verwendet wird, die auf einem Anion einer Sulfonsäure, wie p-Toluolsulfonsäure, oder auf einem Anion einer Carbonsäure, wie Trifluoressigsäure, als Komponente b) basiert.

9. Verfahren wie in einem oder mehreren der Ansprüche 6-8 beansprucht, dadurch gekennzeichnet, daß eine Katalysator-Zusammensetzung verwendet wird, bei der die Komponente b) in einem Verhältnis von 1,0 bis 100 Äquivalenten je Grammatom Palladium vorliegt.

10. Verfahren wie in einem oder mehreren der Ansprüche 6-9 beansprucht, dadurch gekennzeichnet, daß eine Katalysator-Zusammensetzung verwendet wird, die einen zweizähligen Phosphor-Liganden als Komponente c) in einem Verhältnis von 0,5-1,5 Mol je Mol der Palladiumverbindung enthält.

11. Verfahren wie in einem oder mehreren der Ansprüche 6-9 beansprucht, dadurch gekennzeichnet, daß eine Katalysator-Zusammensetzung verwendet wird, die einen zweizähligen Stickstoff-Liganden als Komponente c) in einer Menge von 1-50 Mol je Mol der Palladiumverbindung enthält.

12. Verfahren wie in einem oder mehreren der Ansprüche 6-11 beansprucht, dadurch gekennzeichnet, daß es bei einer Temperatur von 30-150 °C, einem Druck von 20 - 100 bar und einem molaren Verhältnis von olefinisch ungesättigter Verbindung zu Kohlenmonoxid in dem zu polymerisierenden Gemisch von 5:1 - 1:2 durchgeführt wird, und daß je Mol der zu polymerisierenden olefinisch ungesättigten Verbindung solch eine Menge einer Katalysator-Zusammensetzung verwendet wird, daß sie $10^{-6}$ - $10^{-4}$ Grammatom Palladium enthält.

## Revendications

1. Nouveaux polymères de monoxyde de carbone avec un ou plusieurs alpha-oléfines et avec un ou plusieurs composés insaturés oléfiniquement, caractérisés en ce que:
   a) l'on peut les obtenir par polymérisation de monoxyde de carbone avec une ou plusieurs alpha-mono-oléfines (A) et avec un ou plusieurs composés insaturés di-oléfiniquement (B), composés dans lesquels les doubles liaisons sont conjuguées,
   b) ils ont une structure linéaire,

c) ils sont composés de motifs de formule -(CO)-A'- et de motifs de formule -(CO)-B'- dans lesquelles A' et B' représentent des motifs de monomère dérivés des monomères A et B, respectivement, et dans lesquels dans le copolymère le motif (CO) alterne avec les motifs A'et B', et
d) en moyenne ils contiennent moins de 1 000 motifs -(CO)-A'- par motif -(CO)-B'-.

**2.** Polymères selon la revendication 1, caractérisés en ce qu'en moyenne ils contiennent moins de 500 motifs -(CO)-A'- par motif -(CO)-B'-

**3.** Polymères selon la revendication 1 ou 2, caractérisés en ce que l'on peut les obtenir à partir d'un mélange de monomères qui ne contient qu'un monomère A et qu'un monomère B.

**4.** Polymères selon une ou plusieurs des revendications 1 à 3, caractérisés en ce que le monomère A est l'éthène.

**5.** Polymères selon une ou plusieurs des revendications 1 à 4, caractérisés en ce que le monomère B est le butadiène.

**6.** Procédé pour la préparation de polymères selon la revendication 1, caractérisé en ce que le mélange de monoxyde de carbone avec un ou plusieurs monomères A et avec un ou plusieurs monomères B est polymérisé en présence d'une composition catalytique basée sur
a) un composé de palladium,
b) un anion d'un acide ayant un pKa inférieur à 4, et
c) soit un ligand bidentate de phosphore de formule générale $R_1R_2P\text{-}R\text{-}PR_3R_4$ dans laquelle $R_1$, $R_2$, $R_3$ et $R_4$ représente des groupements hydrocarbyle identiques ou différents qui peuvent être ou pas substitués avec des groupes polaires et R représente un groupe bivalent organique de pontage contenant au moins deux atomes de carbone dans le pont, ou un ligand bidentate d'azote de formule

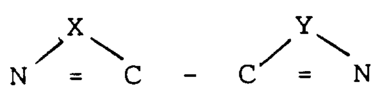

dans laquelle X et Y représentent des groupements de pontage identiques ou différents contenant chacun trois ou quatre atomes dans le pont, dont deux au moins sont des atomes de carbone.

**7.** Procédé selon la revendication 6, caractérisé en ce que l'on utilise une composition catalytique qui est à base de sel de palladium d'un sel carboxylique tel que l'acétate de palladium, comme composant a).

**8.** Procédé selon la revendication 6 ou 7, caractérisé en ce que l'on utilise une composition catalytique qui est à base d'un anion ou d'un acide sulfonique, tel que l'acide p-toluènesulfonique ou un anion d'un acide carboxylique, tel que l'acide trifluoroacétique, comme composant b).

**9.** Procédé selon une ou plusieurs des revendications 6 à 8, caractérisé en ce que l'on utilise une composition catalytique dans laquelle le composant b) est présent en un rapport de 1,0 à 100 équivalents par atome gramme de palladium.

**10.** Procédé selon une ou plusieurs des revendications 6 à 9, caractérisé en ce que l'on utilise la composition catalytique qui contient un ligand bidentate de phosphore comme composant c), en un rapport de 0,5 à 1,5 moles par mole de composé de palladium.

**11.** Procédé selon une ou plusieurs des revendications 6 à 9, caractérisé en ce que l'on utilise une composition catalytique qui contient un ligand bidentate d'azote comme composant c), en une quantité de 1 à 50 moles par mole de composé de palladium.

**12.** Procédé selon une ou plusieurs des revendications 6 à 11, caractérisé en ce qu'il est effectué à une température de 30 à 150 °C, sous une pression de 20 à 100 bars et avec un rapport molaire de

composés insaturés oléfiniquement au monoxyde de carbone dans le mélange à polymériser de 5,1 à 1:2 et en ce que par mole de composé insaturé oléfiniquement à polymériser, on utilise une quantité de composition catalytique de façon à contenir $10^{-6}$ à $10^{-4}$ atome gramme de palladium.